# EUROPEAN PATENT APPLICATION

(11) **EP 4 714 829 A1**
(43) Date of publication of application: **25.03.2026**
(21) Application number: 24382993.4
(22) Date of filing: 18.09.2024
(51) Int. Cl.: B64D 33/00, B64D 33/02, B64D 41/00, B64D 13/06

(54) **RAM AIR INLET ASSEMBLY**

(71) Applicant: AIRBUS OPERATIONS, S.L.U., 28906 Getafe (Madrid) (ES)
(72) Inventor: Mira Ríos, Antonio, 28906 Getafe (ES); Fernández Ramírez, Ana, 28906 Getafe (ES)
(74) Representative: Elzaburu S.L.P.

(57) **Abstract**

RAM air inlet assembly (1), comprising a mechanism and actuator means (2) configured to provide movement to the mechanism, such that the actuator means (2) and the mechanism are connected by a joint, wherein the mechanism comprises:
- a forward flap (4) and a rear flap (5) joined by hinge means (6),
- a joint (7) on the end of the rear flap (5) opposite the joining of the forward flap (4) and the rear flap (5), and
- a joint (16) on the end of the forward flap (4) opposite the joining of the forward flap (4) and the rear flap (5), the joint (16) being connected to a structure where the RAM inlet assembly (1) is installed,
wherein the joint (7) on the end of the rear flap (5) opposite the joining of the forward flap (4) and the rear flap (5) is a sliding joint.

## Description

### Field of the invention

The present invention relates to a RAM air inlet assembly, mainly used in a corresponding aircraft duct.

### Background

There are many RAM air inlets (RAI) for aircraft already known in the state of the art.

Usually prior art RAM Air Inlet assemblies are composed of two doors or flaps, joined by hinges, and two bars that close the kinematics. Its kinematic is controlled by an actuator-balancer-transmission bar link (called "motor link") that has an articulated joint with the doors.

This baseline design has been adapted for each aircraft program because of its own requirements: loads, flow to ingest for the Air Generator System (AGS), equipment to be used, etc.

These prior art configurations provide RAM air inlet assemblies that are able to work satisfactorily. However, there is a need to reduce high levels of vibration and to mitigate or reduce the unsteady aerodynamics, which may cause in-service issues to the aircraft.

### Summary of the invention

Thus, it is an object of the invention to provide a RAM air inlet assembly that is able to overcome the mentioned drawbacks.

The invention provides a RAM air inlet assembly, comprising a mechanism and actuator means configured to provide movement to the mechanism, such that the actuator means and the mechanism are connected by a joint, wherein the mechanism comprises:
- a forward flap and a rear flap joined by hinge means,
- a joint on the end of the rear flap opposite the joining of the forward flap and the rear flap, the joint being connected to a structure where the RAM inlet assembly is installed,
   and
- a joint on the end of the forward flap opposite the joining of the forward flap and the rear flap,
wherein the joint on the end of the rear flap opposite the joining of the forward flap and the rear flap is a sliding joint.

The configuration of the RAM air inlet assembly of the invention allows a better isolation between the two sides of the duct, which implies a better performance and less aero-vibration excitation. Also, the design of the rear joint is more robust for vibration, especially for torsion modes.

Other features and advantages of the present invention will become apparent from the following detailed description of an illustrative embodiment and not limiting its purpose in connection with the accompanying figures.

### Description of figures

Figure 1 shows a prior art RAM air inlet assembly with its main elements.
Figure 2 shows a detail of Figure 1.
Figure 3 shows schematically the configuration of a RAM air inlet assembly of an embodiment of the invention.
Figure 4 shows schematically the configuration of a RAM air inlet assembly of another embodiment of the invention.
Figure 5 shows a detail of Figures 3 and 4, corresponding to an embodiment that uses one single roller.
Figure 6A shows another embodiment that uses a single roller.
Figure 6B shows a multi-roller on one rail, corresponding to another embodiment.
Figure 7 shows a perspective view of the rail of Figure 6.
Figure 8 shows a cross-sectional view A-A of the rail of Figures 6 and 7.
Figure 9 shows Figure 8 with a roller.
Figure 10 shows a bar with a multi-roller of Figure 6 at each end.
Figure 11 shows another multi-roller on one rail, corresponding to another embodiment.
Figure 12 shows a perspective view of the rail of Figure 11.
Figure 13 shows a cross-sectional view B-B of the rail of Figures 11 and 12.
Figure 14 shows another multi-roller on one rail, corresponding to another embodiment.
Figure 15 shows a bar with a multi-roller of Figure 14 at each end.
Figure 16 shows schematically an assembly comprising a motor and a slider-crank system.

### Detailed description of the invention

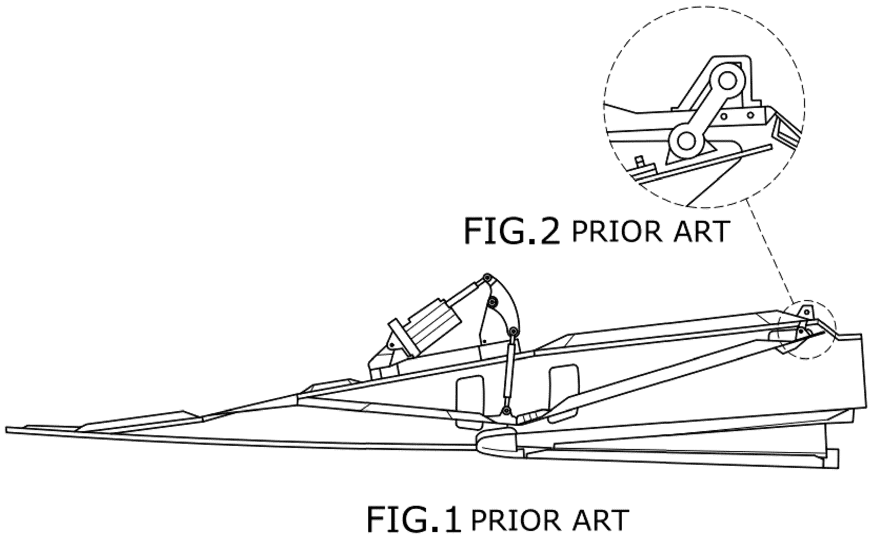

Figure 1 shows a prior art RAM air inlet assembly, composed of two doors or flaps joined by hinges, and two end bars that close the kinematics. Its kinematics is controlled by a motor link (formed by an actuator, a balancer and a transmission bar), that has an articulated joint with the flaps. Figure 2 shows a detail of the upper right portion of the assembly of Figure 1, in which one of the bars can be seen.

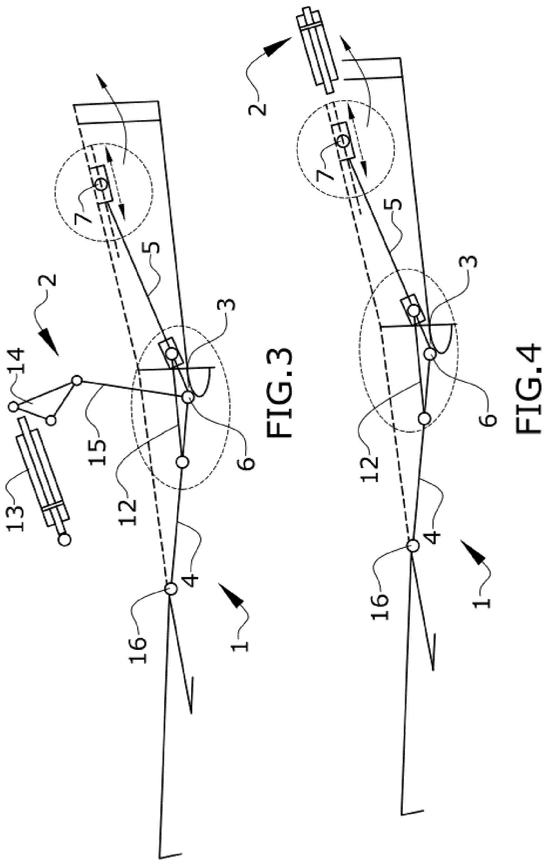

Figure 3 shows schematically the configuration of a RAM air inlet assembly 1 of an embodiment of the invention. It comprises a mechanism with the following elements:
- a forward flap 4 and a rear flap 5 joined by hinge means 6,
- a sliding joint 7 on the end of the rear flap 5 opposite the joining of the forward flap 4 and the rear flap 5, and
- a joint 16 on the end of the forward flap 4 opposite the joining of the forward flap 4 and the rear flap 5, the joint 16 being connected to a structure where the RAM inlet assembly 1 is installed.

The RAM air inlet assembly 1 of this first embodiment also comprises actuator means 2 configured to provide movement to the mechanism. The actuator means 2 and the mechanism are connected by a joint 3 at the central part of the mechanism (for instance, near the hinge means 6 that join the forward flap 4 and the rear flap 5).

The actuator means 2 of this first embodiment may comprise an actuator 13, a balancer 14 and a transmission rod 15, with the transmission rod 15 being connected to the mechanism.

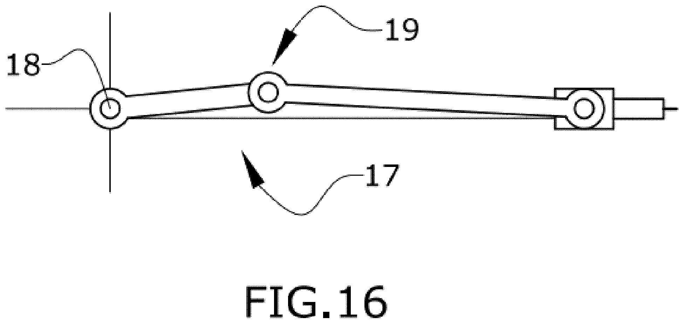

Instead of an actuator 13, an assembly 17 comprising a motor 18 and a slider-crank system 19 to provide a linear movement can be used (see figure 16). The actuator 13 or the assembly 17 with the motor 18 and the slider-crank system 19 are connected to the balancer 14.

Figure 4 shows schematically the configuration of a RAM air inlet assembly 1 of another embodiment of the invention. It comprises a mechanism with the following elements:
- a forward flap 4 and a rear flap 5 joined by hinge means 6,
- a sliding joint 7 on the end of the rear flap 5 opposite the joining of the forward flap 4 and the rear flap 5, and
- a joint 16 on the end of the forward flap 4 opposite the joining of the forward flap 4 and the rear flap 5.

The RAM air inlet assembly 1 of this second embodiment also comprises actuator means 2 configured to provide movement to the mechanism. The actuator means 2 comprise an actuator or an assembly 17 of a motor 18 with a slider-crank system 19 which is directly connected by a joint to the sliding joint 7 of the mechanism.

In this second embodiment the new location of the actuator or the assembly 17 of the motor 18 with the slider-crank system 19 can be in a lateral side (inboard or outboard) or on the middle of the duct. The first location is preferred as it is easier to link the elements with a lower impact in the duct and the equipment performance could be improved. This design allows to save weight as the elements of the actuator means 2 are reduced. As less elements are required, the vibration level in the second embodiment is lower. Another advantage of this second embodiment is the reduction of maintenance tasks.

In both embodiments of the RAM air inlet assembly 1 of Figures 3 and 4 the mechanism additionally may comprise a sliding bar 12 that joins the forward flap 4 and the rear flap 5, the sliding bar 12 being fixed to the forward flap 4 and configured to slide in the rear flap 5. This sliding bar 12 between the flaps 4, 5 has the object of mitigating the vibrations experienced by the rear flap 5.

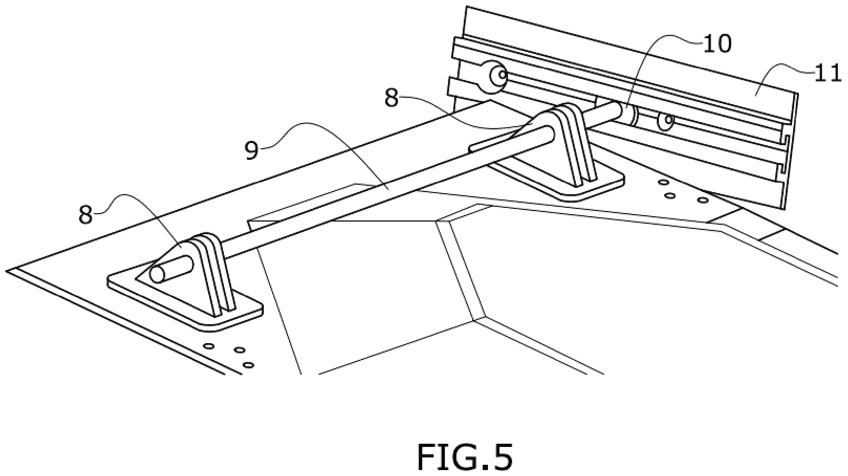

As for the sliding joint 7 on one end of the rear flap 5, it may comprise at least two fittings 8, a bar 9, and a roller 10 and a rail 11 per side, such that each roller 10 is configured to roll in the corresponding rail 11 (see Figure 5, in which the roller 10 designates a generic roller).

In the second embodiment the actuator or the assembly 17 of the motor 18 with the slider-crank system 19 may be directly connected to the bar 9 of the sliding joint 7 of the mechanism.

The kinematics only requires a single roller per rail, but loads, maintenance or other aspects can make it necessary to use a multi-roller design.

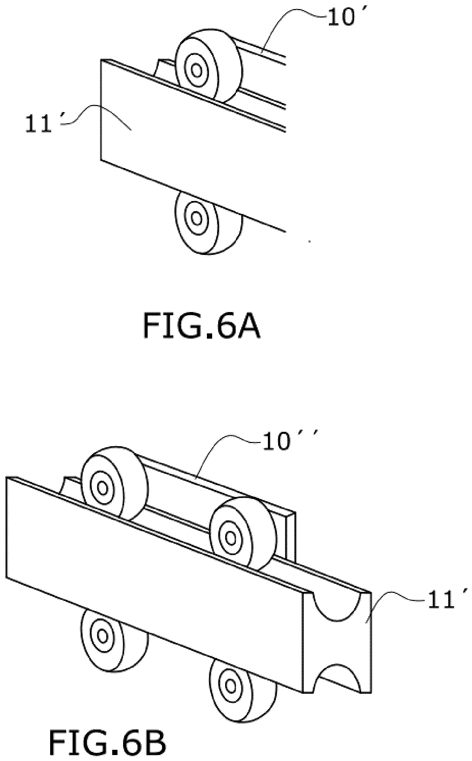

Figure 6A shows a single roller 10' on a rail 11', such that the roller 10' comprises a pair of wheels that are located outside the rail 11'.

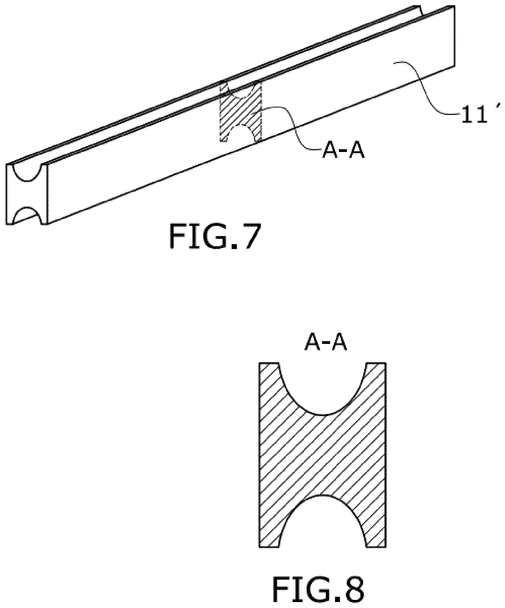

Figures 6B to 10 show several views of a multi-roller 10" and a corresponding rail 11', as a part of an example of a sliding joint 7 of the invention. This multi-roller 10" has four wheels but it can comprise any number of pairs of wheels.

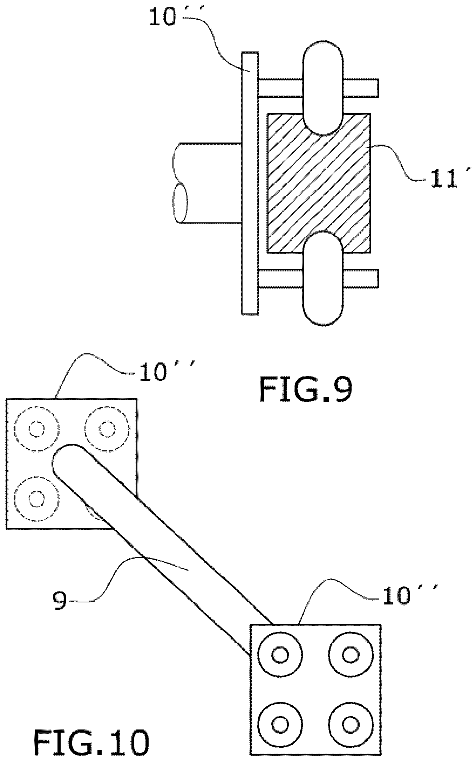

Figure 10 shows a bar 9 of the sliding joint 7 with a multi-roller 10" of Figure 6B at each end.

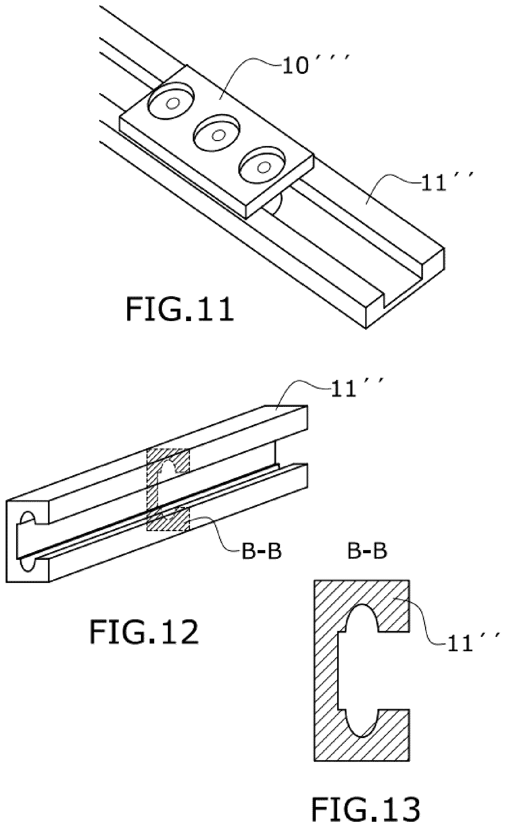

Figures 11 to 13 show several views of another multi-roller 10‴ and a corresponding rail 11", as a part of another example of a sliding joint 7 of the invention. This multi-roller 10‴ has wheels that can run inside the corresponding rail 11".

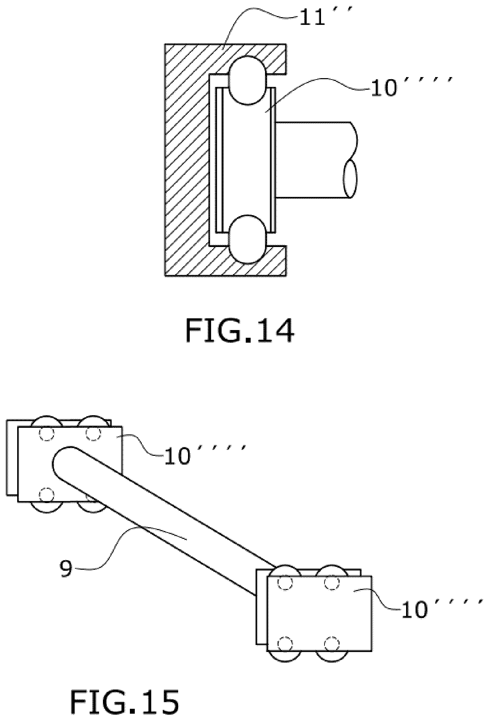

Figure 14 shows another multi-roller 10"" and a corresponding rail 11", as a part of another example of a sliding joint 7 of the invention. This multi-roller 10"" has two pairs of wheels (see figure 15) that can run inside the corresponding rail 11".

The multi-roller 10"" of figures 14 and 15 differs from the multi-roller 10" of figure 6B in that the multi-roller 10"" has two parallel plates. Its final purpose it is to add more endurance and better fatigue properties in the sliding zone.

Figure 15 shows a bar 9 of the sliding joint 7 with the multi-roller 10"" of Figure 14 at each end.

Throughout this document, relative forward and rear references should be considered with the front of the aircraft as the forward reference and the tail of the aircraft as the rear reference.

Although the present invention has been fully described in connection with preferred embodiments, it is apparent that modifications can be made within the scope, not considering this as limited by these embodiments, but by the content of the following claims.

## Claims

1. RAM air inlet assembly (1), comprising a mechanism and actuator means (2) configured to provide movement to the mechanism, such that the actuator means (2) and the mechanism are connected by a joint, wherein the mechanism comprises:
- a forward flap (4) and a rear flap (5) joined by hinge means (6),
- a joint (7) on the end of the rear flap (5) opposite the joining of the forward flap (4) and the rear flap (5), and
- a joint (16) on the end of the forward flap (4) opposite the joining of the forward flap (4) and the rear flap (5), the joint (16) being connected to a structure where the RAM inlet assembly (1) is installed,
**characterized in that** the joint (7) on the end of the rear flap (5) opposite the joining of the forward flap (4) and the rear flap (5) is a sliding joint.

2. RAM air inlet assembly (1), according to claim 1, wherein the sliding joint (7) comprises at least two fittings (8), a bar (9), and a roller (10) and a rail (11) per side, such that each roller (10) is configured to roll in the corresponding rail (11).

3. RAM air inlet assembly (1), according to claim 2, wherein the roller (10) is a single roller.

4. RAM air inlet assembly (1), according to claim 2, wherein the roller (10) comprises more than one wheel.

5. RAM air inlet assembly (1), according to any of the previous claims, wherein the mechanism additionally comprises a sliding bar (12) that joins the forward flap (4) and the rear flap (5), the sliding bar (12) being fixed to the forward flap (4) and configured to slide in the rear flap (5).

6. RAM air inlet assembly (1), according to any of the previous claims, wherein the actuator means (2) are connected to the mechanism by a joint (3) placed at the central part of the mechanism.

7. RAM air inlet assembly (1), according to claim 6, wherein the actuator means (2) comprise an actuator (13) or an assembly (17) of a motor (18) with a slider-crank system (19), a balancer (14) connected to the actuator (13) or to the assembly (17) of the motor (18) with the slider-crank system (19) and a transmission rod (15), the transmission rod (15) being connected to the mechanism by the joint (3).

8. RAM air inlet assembly (1), according to any of claims 1 to 5, wherein the actuator means (2) comprise an actuator or an assembly (17) of a motor (18) with a slider-crank system (19) which is directly connected to the sliding joint (7) of the mechanism.

9. RAM air inlet assembly (1), according to claim 8 when dependent on any of claims 2 to 5, wherein the actuator or the assembly (17) of the motor (18) with the slider-crank system (19) is directly connected to the bar (9) of the sliding joint (7) of the mechanism.
